# EUROPEAN PATENT APPLICATION

(11) **EP 1 355 083 A2**
(43) Date of publication of application: **22.10.2003**
(21) Application number: 03075995.5
(22) Date of filing: 04.04.2003
(51) Int. Cl.: F16F 9/53

(54) **Thermal model for magnetorheological damper temperature compensation**

(30) Priority: 16.04.2002 GB 0208685
(71) Applicant: Delphi Technologies, Inc., Troy, MI 48007 (US)
(72) Inventor: Oakley, Robin, 60800 Trumilly (FR); Shal, David Andrew, Bellbrook, OH 45305 (US); Barta, David J., Beavercreek, OH 45435 (US)
(74) Representative: Denton, Michael John

(57) **Abstract**

The invention provides a method of controlling at least one magnetorheological damper. The invention also provides a computer usable medium including a program and a suspension control system for achieving the same. The method includes calculating a power input coefficient based on at least one power input characteristic. A power dissipation coefficient is calculated based on at least one power dissipation characteristic. A damper temperature is estimated based on the calculated power input coefficient and the calculated power dissipation coefficient. At least one dampening force characteristic is modulated based on the estimated damper temperature.

## Description

Applicants claim priority to patent application 0208685.8 filed in Great Britain on April 16, 2002, a certified copy of which is attached.

### TECHNICAL FIELD OF THE INVENTION

The present invention relates generally to vehicular suspension systems. More particularly, the invention relates to a thermal model for magnetorheological damper temperature compensation.

### BACKGROUND OF THE INVENTION

Linear suspension dampers, such as shock absorbers and McPherson struts, may include a rod and piston positioned within a cylindrical housing. Suspension movements transmitted to the rod and piston may be dampened as the damper compresses and rebounds. The rod may be attached concentrically to one side of the piston and both translate back and forth inside the housing, which is filled with a substantially incompressible hydraulic fluid. As the piston moves, the fluid is forced through one or more passageways from in the piston. The piston is met with frictional resistance during damper compression and rebound.

Magnetorheological (MR) fluids are commonly used in dampers to provide favorable dampening characteristics during compression and rebound. MR fluids are generally suspensions of magnetic particles such as iron or iron alloys in a fluid medium. The flow characteristics of these fluids can change by several orders of magnitude within milliseconds when subjected to a suitable magnetic field due to suspension of the particles. The ferromagnetic particles remain suspended under the influence of magnetic fields and applied forces. MR fluids are well known and have been found to have desirable electromagnetomechanical interactive properties for controlling dissipative forces along the damper's axis.

A linear acting MR damper piston may include a coil assembly, a core, and an annular piston ring positioned around the pole pieces to form an annular flow passageway. When the piston is displaced, MR fluid is forced through the passageway from one area of the damper housing to another. When the coil is energized (e.g., damper on-state), a magnetic field permeates a portion of the passageway and excites a transformation of the MR fluid to a state that exhibits increased damping force. Thus, the degree of dampening force may be selectively controlled by adjusting the current run through the coil assembly and locally modulating the flow characteristics of the MR fluid.

MR fluid viscosity is a function of fluid temperature, which invariably increases during damper operation. An increase in fluid temperature typically attenuates damping force thereby changing the dampening profile and vehicle ride characteristics. To maintain a consistent dampening profile, the MR fluid state may be used to compensate for changes in fluid temperature. For example, the coil assembly current may be increased with higher temperatures to counter the effects of decreased fluid viscosity and dampening force. This strategy, however, is predicated on a reliable measurement or fluid temperature estimation. Accordingly, it would be desirable to provide a strategy for estimating damper temperature.

Therefore, it would be desirable to provide a thermal model for magnetorheological damper temperature compensation that overcomes the aforementioned and other disadvantages.

### SUMMARY OF THE INVENTION

A first aspect of the present invention provides a method of controlling a magnetorheological damper. The method includes calculating a power input coefficient based on at least one power input characteristic. A power dissipation coefficient is calculated based on at least one power dissipation characteristic. A damper temperature is estimated based on the calculated power input coefficient and the calculated power dissipation coefficient. At least one dampening force characteristic is modulated based on the estimated damper temperature.

A second aspect of the present invention provides a computer usable medium including a program for controlling a magnetorheological damper as described for the first aspect of the invention.

A third aspect of the present invention provides a suspension control system for controlling at least one magnetorheological damper. The suspension control system includes means for calculating a power input coefficient based on at least one power input characteristic and means for calculating a power dissipation coefficient based on at least one power dissipation characteristic. The suspension control system further includes means for estimating a damper temperature based on the calculated power input coefficient and the calculated power dissipation coefficient and means for modulating at least one dampening force characteristic based on the estimated damper temperature

The foregoing and other features and advantages of the invention will become further apparent from the following detailed description of the presently preferred embodiments, read in conjunction with the accompanying drawings. The detailed description and drawings are merely illustrative of the invention, rather than limiting the scope of the invention being defined by the appended claims and equivalents thereof.

### BRIEF DESCRIPTION OF THE DRAWINGS

**FIG. 1** is a schematic view of a vehicle with a suspension control system in accordance with the present invention;
**FIG. 2** is a flow diagram of a magnetorheological damper control algorithm for use in the suspension control system of **FIG. 1**;
**FIG. 3** is a block diagram of a portion of the magnetorheological damper control algorithm represented in **FIG. 2;**
**FIG. 4** is a block diagram detail of a power input coefficient calculation block shown in **FIG. 3;**
**FIG. 5** is a block diagram detail of an ambient temperature coefficient calculation block shown in **FIG. 3;** and
**FIG. 6** is a block diagram detail of a damper temperature estimation block shown in **FIG. 3.**

### DESCRIPTION OF THE PRESENTLY PREFERRED EMBODIMENTS

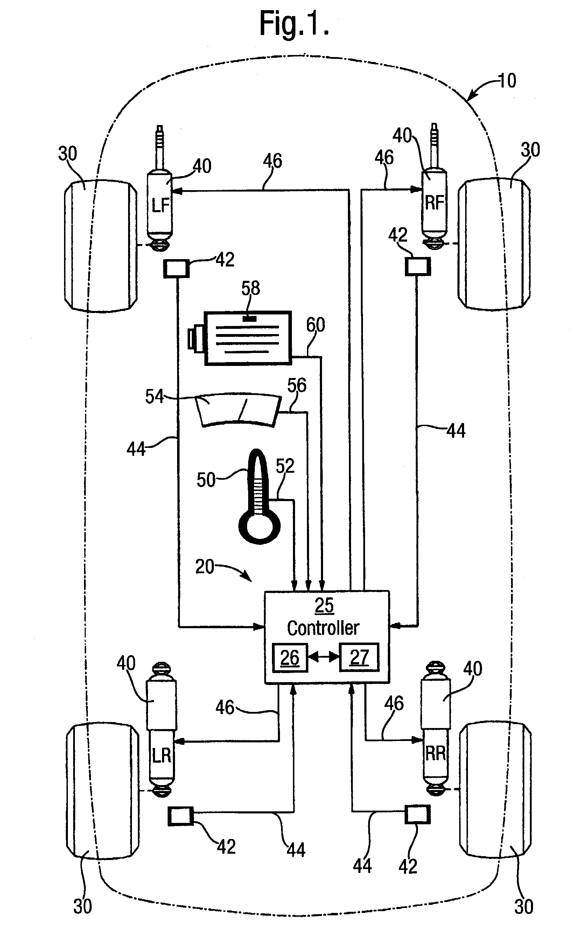

Referring to the drawings, wherein like reference numerals refer to like elements, **FIG. 1** is a schematic view of a vehicle, shown generally by numeral **10,** with a suspension control system **20** in accordance with the present invention. Those skilled in the art will recognize that the vehicle **10** and suspension control system **20** may include a number of alternative designs and may be employed in a variety of applications. In the present description and figures, the vehicle **10** and suspension control system **20** include four linear acting fluid magnetorheological (MR) dampers for generating dampening forces in a motor vehicle suspension system.

Vehicle **10** is supported on four wheels **30** by four suspensions including springs (not shown) of a known type. Each suspension may include a variable-force, real time, controllable MR damper **40** connected to dampen vertical forces between wheel **30** and vehicle **10** body at that suspension point. Although many such suspension arrangements are known and may be adapted for use with the present invention, the damper **40** may be an electrically controllable, variable dampening force shock absorber with a weight bearing coil spring in a parallel spring/shock absorber or McPherson strut arrangement.

An exemplary MR damper that may be adapted for use with the present invention is described in U.S. Pat. No. 6,419,058 to Oliver *et al.* Such a damper may receive a signal for generating variable dampening forces by, for example, applying current to a coil assembly associated with a damper piston. The coil generates a magnetic field inducing localized flow characteristic changes in MR fluid thereby increasing dampening force.

Each damper **40** may include a relative position sensor **42** that provides an output signal, represented by line **44**, indicative of the relative vertical distance between the corresponding wheel **30** and a suspended vehicle body at that corner of the vehicle **10.** The outputs of position sensors **42** may be differentiated to produce relative body-wheel vertical velocity signals for each corner of the vehicle **10**.

In one embodiment of the present invention, the position sensor **42** may include a resistive device mounted to the vehicle **10** body and a link pivotally coupled between the wheel **30** and a pivot arm on the resistive device. The resistive device may provide an impedance output that varies with the relative vertical position between wheel **30** and the corner of body **10**. Each position sensor **42** may further include an internal circuit board with a buffer circuit for buffering the output signal of the resistive device and providing the buffered signal to a suspension controller **25**. Suitable position sensors **42** are known to, or can be constructed by, those skilled in the art. Numerous alternative types of position, velocity, and acceleration sensors, including transformer type sensors, may be adapted for use with the present invention.

The outputs of the position sensors **42** may be provided to the suspension controller **25**, which may process the signals to calculate damper relative velocity and thus estimate average dampening force. In one embodiment, the suspension controller **25** may utilize such data stored in a memory portion, such as a look-up table, to estimate average dampening force wherein a direct linear relationship exists between damper relative velocity and average dampening force. The data may be determined experimentally for each individual damper **40**.

In another embodiment, the suspension controller **25** may estimate dampening force using any number of mathematical formulae or equations known in the art. In yet another embodiment, damper relative velocity may be measured directly by appropriate sensors coupled to the damper **40** and the sensor information sent to the suspension controller **25**. Those skilled in the art will appreciate that numerous strategies may be utilized to facilitate calculations and determinations associated with the present invention. The calculations and determinations may be performed using look-up tables, equations, relationships, and other means known in the art.

In one embodiment, the suspension controller **25** may include a digital microprocessor **26** programmed to process a plurality of input signals in a stored algorithm and generate output control signals **46** for varying the dampening force of the dampers **40**. The methods, algorithms, and determinations (e.g., calculations and estimations), including those based on equations or value tables, may be performed by a device such as the microprocessor **26**. The microprocessor **26** may receive input, perform determinations, and provide output for controlling the damper **40** dampening force and, consequently, the vehicle **10** suspension characteristics.

The computer usable medium and value tables associated with the present invention may be programmed or read into a microprocessor memory portion **27** (e.g., ROM, RAM, and the like) for executing functions associated with the present invention. Analog signal processing may be provided for some of the input signals. For example, the signals from relative position sensors **42** may be low-pass filtered through four analog low-pass filters and differentiated through four analog differentiators to provide four discrete relative velocity signals, one for each damper **40**.

An exemplary combination of such a low pass filter and differentiator is described in U.S. Pat. No. 5,255,191, issued to Fulks. The resulting relative velocity signals represent the relative vertical velocities between each of wheels **30** and the corresponding corner of the vehicle **10** body. Each of these relative velocity signals may be input into the microprocessor **26**, which includes an input A/D converter with multiplexed inputs. In an alternative embodiment, the relative position sensors **42** may be replaced with relative velocity sensors of a type known to those skilled in the art capable of outputting signals indicative of the relative velocity between each wheel **30** and corner of the vehicle **10** body. In this alternative, there is no need for the differentiators.

Various other digital/discrete and/or analog/continuous signals may be provided to the microprocessor **26** through an I/O apparatus. In one embodiment, one or more ambient temperature sensor(s) **50** may provide ambient temperature signal(s) **52** to the microprocessor **26**. Similarly, one or more vehicle speed sensor(s) **54** may provide vehicle speed signal(s) **56** to the microprocessor **26**, and one or more engine temperature sensor(s) **58** may provide engine temperature signal(s) **60** to the microprocessor **26**. The signals **44, 52, 56, 60** may be buffered in a manner known in the art to remove unwanted noise. Furthermore, the signals **44, 52, 56, 60** may comprise a pulse train having pulse timing, of which the type and decoding are well known in the art.

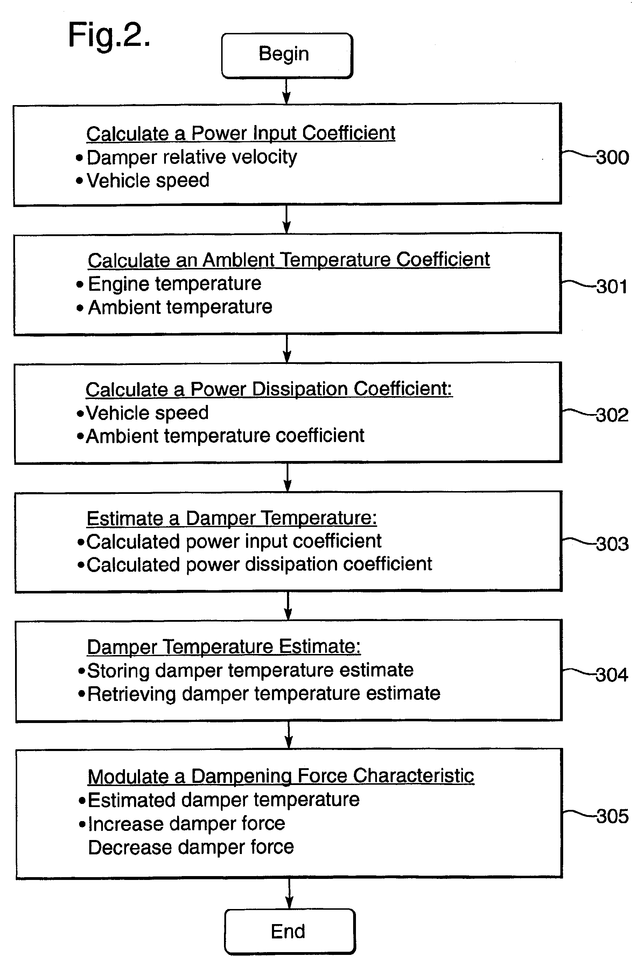

**FIG. 2** is a flow diagram of a magnetorheological damper control algorithm for use in the suspension control system **20** of **FIG. 1**. In one embodiment, a power input coefficient is calculated based on at least one power input characteristic (step **300**). The power input coefficient calculation may address numerous factors that provide direct or indirect energy input to the damper (fluid) and may thus affect its temperature. In one embodiment, the power input characteristics may be damper relative velocity and vehicle speed. In another embodiment, the power input characteristic may address numerous other factors influencing damper power input including, but not limited to, damper coil current and damper coil resistance.

An ambient temperature coefficient may be calculated based on at least one thermal characteristic (step **301**). The ambient temperature coefficient calculation may address numerous factors that affect the air temperature immediately surrounding a given damper. In one embodiment, the thermal characteristics may be engine temperature and ambient temperature. In another embodiment, the thermal characteristic may address numerous other factors influencing damper air temperature.

A power dissipation coefficient is calculated based on at least one power dissipation characteristic (step **302**). The power dissipation coefficient calculation may address numerous factors that affect energy output from the damper (fluid) and may thus affect its temperature. In one embodiment, the power dissipation characteristic may be vehicle speed and the previously calculated ambient temperature coefficient. In another embodiment, the power dissipation coefficient may address numerous other factors influencing damper power output including, but not limited to, damper surface area, damper heat conductivity, and damper air flow. Those skilled in the art will recognize that various characteristics may be included or excluded in the power input, ambient temperature, and power dissipation coefficient calculations without limiting the function of the present invention. Numerous other factors may affect the damper temperature and may thus be included in the calculation of the coefficients.

A damper temperature is then estimated based on the calculated power input coefficient and the calculated power dissipation coefficient (step **303**). A temperature estimate may be provided for each vehicle damper. The calculated damper temperature estimate may be stored and retrieved in the microprocessor memory portion at essentially any point of the magnetorheological damper control algorithm (step **304**). At least one dampening force characteristic may then be modulated based on the estimated damper temperature (step **305**). In one embodiment, modulating the dampening force characteristic includes increasing or decreasing damper force to compensate for changes in damper performance due to fluid temperature changes. This and other aspects of the magnetorheological damper control algorithm will now be described in further detail.

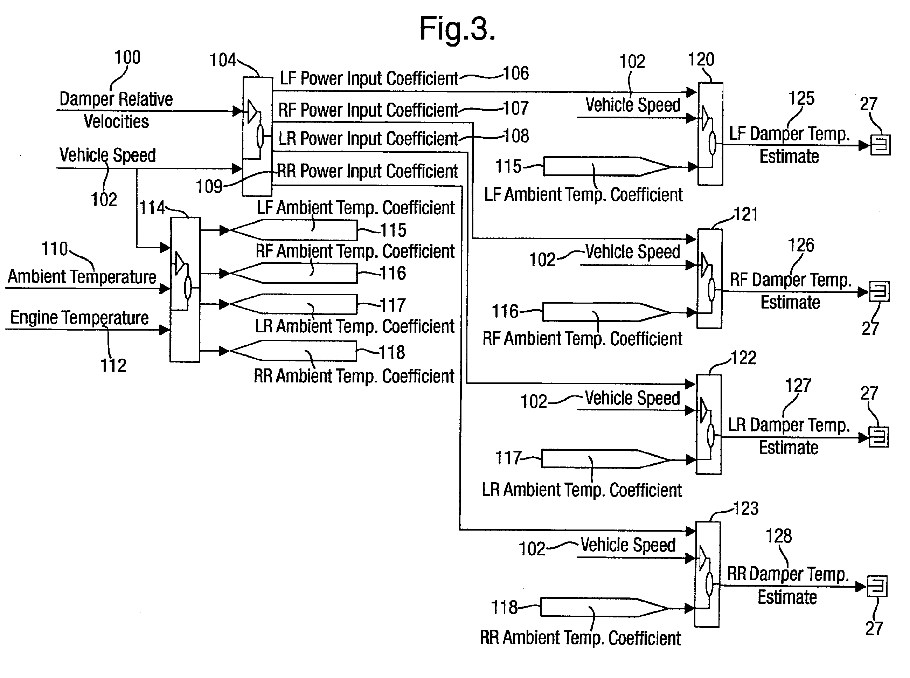

**FIG. 3** is a block diagram of a portion of the magnetorheological damper control algorithm represented in **FIG. 2.** In one embodiment, four damper relative velocities **100** and a vehicle speed **102** may be input into a power input block **104** for calculating four power input coefficients, one for each damper: a left front (LF) power input coefficient **106**, a right front (RF) power input coefficient **107**, a left rear (LR) power input coefficient **108**, and a right rear (RR) power input coefficient **109**. The vehicle speed **102**, an ambient temperature **110**, and an engine temperature **112** may be provided to an ambient temperature coefficient calculation block **114** for calculating four ambient temperature coefficients, one for each damper **115, 116, 117, 118**. The vehicle speed **102** and the corresponding calculated power input coefficient **106, 107, 108, 109** and ambient temperature coefficient **115, 116, 117, 118** may be provided to a temperature estimation block **120, 121, 122, 123** for estimating temperature of each damper: a left front (LF) damper temperature estimate **125**, a right front (RF) damper temperature estimate **126**, a left rear (LR) damper temperature estimate **127**, and a right rear (RR) damper temperature estimate **128.**

The damper temperature estimates **125, 126, 127, 128** may then be stored in the microprocessor memory portion **27** for use by the suspension controller. The microprocessor memory portion **27** may provide means for storing the damper temperature estimates **125, 126, 127, 128** in a nonvolatile manner. The damper temperature estimates **125, 126, 127, 128** may be recalled for numerous functions and at various times as, for example, after the vehicle is shut down and restarted.

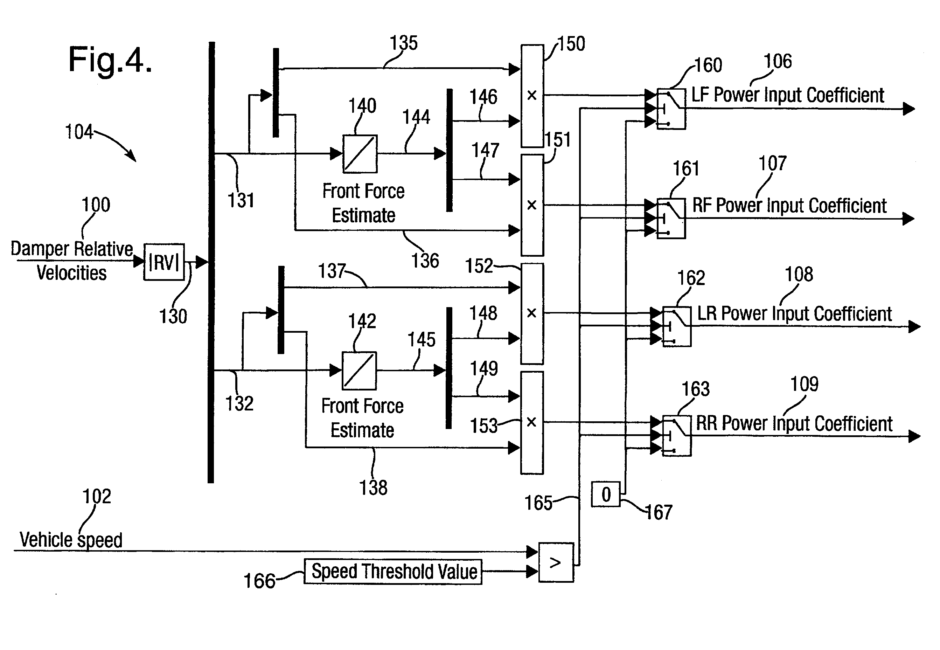

**FIG. 4** is a block diagram detail of the power input coefficient calculation block **104** shown in **FIG. 3.** In one embodiment, an absolute value of the four damper relative velocities **100** may be calculated and the subsequent signal **130** demuxed as known in the art into two portions, representing front and rear damper relative velocities **131, 132.** The front and rear damper relative velocities **131, 132** may be further demuxed into left and right portions, thus producing relative velocity values for each damper **135**, **136, 137, 138.** The front and rear damper relative velocity portions **131, 132** may also be input into front and rear look-up tables **140, 142**, respectively, to provide front and rear damper force value estimates **144, 145.**

Look-up tables **140, 142** may be determined empirically based on typical damper coil current profiles and damper force-velocity characteristics. A straight-line mapping of damper relative velocity to damper force estimate value, as indicated graphically in blocks **140, 142,** may provide an acceptable estimation of damper force value. Higher-order functions of damper relative velocity or multiple-point look-up table approaches may also be used. For a controlled damper such as a magnetorheological damper, the actual damper force value at any instant may be a function of both damper relative velocity and damper coil current.

In the context of estimating damper operating temperature, however, instantaneous accuracy may be less important than the general trend, the latter of which may be estimated satisfactorily based solely on damper relative velocity. In an alternate embodiment, damper force value estimates may be computed based on damper relative velocity and damper coil current, and using a complete two-dimensional mapping of expected damper force versus damper velocity and damper coil current. In this embodiment, damper test press data at multiple test velocities and multiple coil current levels may be used to create the indices for a two-dimensional look-up table. This embodiment will typically produce very accurate damper force estimate values, but may be computationally prohibitive.

The force value estimates **144, 145** may then be demuxed into right and left portions, thus producing force value estimates for each damper **146**, **147, 148, 149.** For each damper, the relative velocity values **135, 136, 137, 138** and force estimates **146, 147, 148, 149** may be input to an operational block **150, 151, 152, 153** wherein a power input coefficient **106, 107, 108, 109** is calculated as the product of the relative velocity values **135, 136, 137, 138** and the corresponding force estimates **146, 147, 148, 149**. The calculated power input coefficient **106, 107, 108, 109** may then be provided to an operational switch **160, 161, 162, 163.**

In one embodiment, the operation switch **160, 161, 162, 163** may also receive a power limit value **165**, which may be determined based on a comparison of vehicle speed **102** to a predetermined speed threshold level **166**. The power limit value **165** may be provided as a "cut-off" so that power input to the damper is ignored or set to a predetermined value when the vehicle travels below a certain speed. For example, if the vehicle speed **102** is equal to or greater than the speed threshold level **166**, then the operational switch **160, 161, 162, 163** may output the calculated power input coefficient **106, 107, 108, 109** from the operational block **150, 151, 152, 153.** If the vehicle speed **102** is below the speed threshold level **166**, then the operational switch **160, 161, 162, 163** may reset the calculated power input coefficient **106, 107, 108, 109** to a predetermined value **167,** in this case 0.

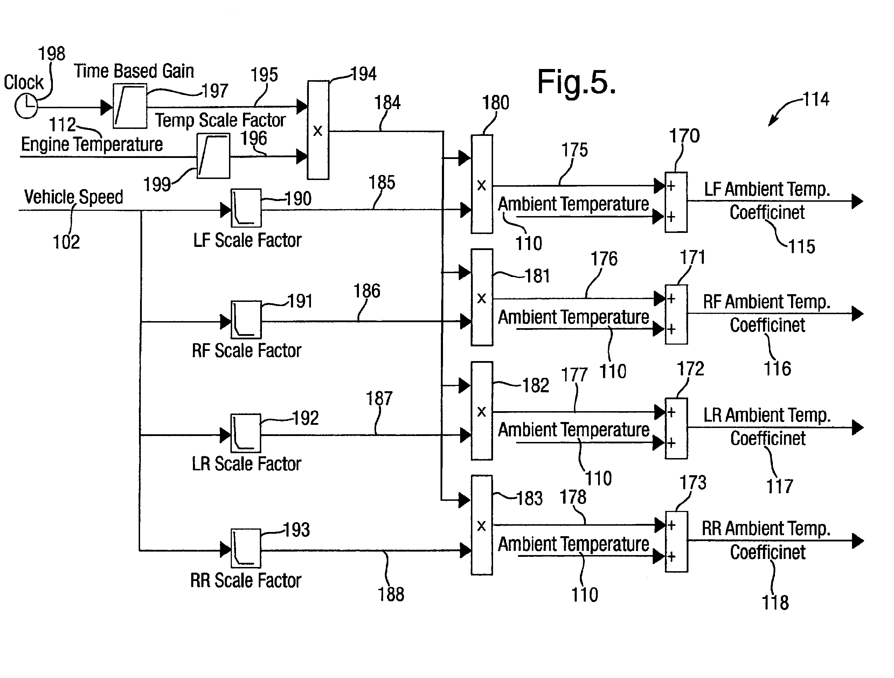

**FIG. 5** is a block diagram detail of an ambient temperature coefficient calculation block **114** shown in **FIG. 3.** In one embodiment, the ambient temperature coefficient **115, 116, 117, 118** may be determined by block **170,** **171, 172, 173** as the sum of the ambient temperature **110** and a temperature adjustment coefficient **175, 176, 177, 178.** The temperature adjustment coefficient **175, 176, 177, 178** may be determined by block **180, 181, 182, 183** as the product of a scale factor **185, 186, 187, 188** and an engine temperature coefficient **184.** The scale factor **185, 186, 187, 188** may be determined from a look-up table **190, 191, 192, 193** for each damper as a function of the vehicle speed **102** wherein differential air flow at each damper affects its cooling rate. Parameters for look-up table **190, 191, 192, 193** will generally be such that scale factor outputs **185, 186, 187, 188** decrease with increasing vehicle speed, and may be determined empirically based on measured vehicle data.

In one embodiment, maximum scale factor outputs **185, 186, 187, 188** (e.g., at low vehicle speed) may be equivalent to the maximum additional temperature for each respective damper due to the influence of engine temperature. These values may be determined by measurement. The engine temperature coefficient **184** may be determined by block **194**, which receives a time based gain value **195** and a scale factor **196**. The time based gain value **195** may be determined from a look-up table **197** that receives input from a clock **198** function wherein the amount of engine heat transferred to the dampers progressively increases over time until a pre-defined maximum gain value is achieved. The scale factor **196** may be determined from a look-up table **199** as a function of the engine temperature **112**.

In one embodiment, the time based gain value **195** and scale factor **196** and thus their product, the engine temperature coefficient **184**, may range in value from 0 to 1. In the same or another embodiment, the engine temperature **112** and/or ambient temperature coefficient **115, 116, 117, 118** may be stored to nonvolatile microprocessor memory portion **27**, so that previously stored values may be retrieved at the start of an ignition cycle and used along with time information to compute initial conditions.

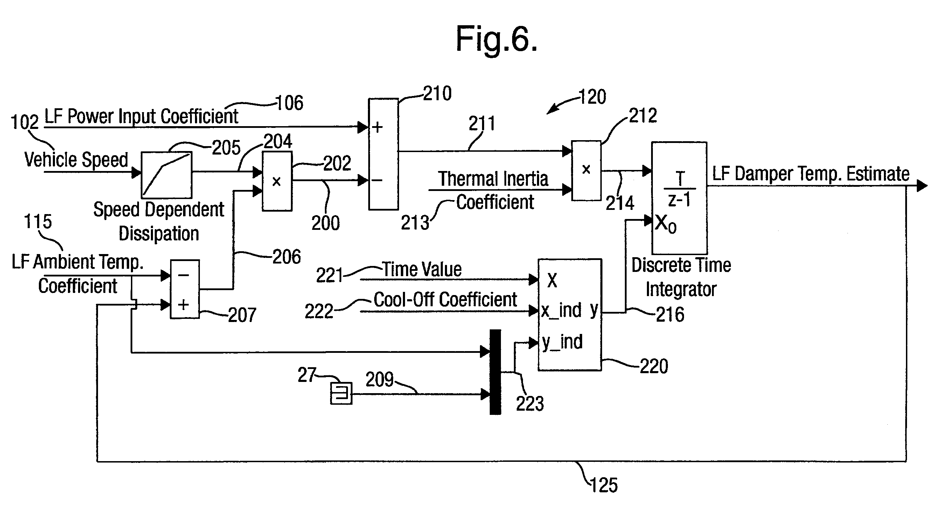

**FIG. 6** is a block diagram detail of the left front damper temperature estimation block **120** shown in **FIG. 3.** In one embodiment, a damper temperature estimation block is performed for each damper in a manner analogous to that shown for the left front damper. The left front damper power input coefficient **106** and a power dissipation coefficient **200** may be input into a heat flow estimation block **210.** The power dissipation coefficient **200** may be calculated by a power dissipation block **202** as the product of a convection/conduction coefficient **204** and a damper temperature rise over ambient value **206.** The convection/conduction coefficient **204** may be calculated via a look-up table **205** using the vehicle speed **102** as an input. The damper temperature rise over ambient value **206** may be calculated by a modified temperature block **207** as the previously computed damper temperature estimate **125** minus the ambient temperature coefficient **115**.

The heat flow estimation block **210** may calculate a fluid heat flow coefficient **211** as the power input coefficient **106** minus the power dissipation coefficient **200**. In this manner, the fluid heat flow coefficient **211** relates to the heat flow into or out of the damper. The fluid heat flow coefficient **211** is input to a block **212** along with a thermal inertia coefficient **213**. The block **212** may compute a modified fluid heat flow coefficient **214** as the product of the fluid heat flow coefficient **211** and the thermal inertia coefficient **213**. Modified fluid heat flow coefficient **214** may be output to a discrete-time integrator block **215**, which may also receive an initial temperature value **216**. The initial temperature value **216** may be calculated by block **220**, which may receive a time value **221**, a cool-off coefficient **222**, and a muxed signal **223** including the previously determined stored damper temperature estimate **209** retrieved from the microprocessor memory portion **27** and the ambient temperature coefficient **115**.

The initial temperature value **216** will generally have a value between the ambient temperature coefficient **115** and the previously determined stored damper temperature estimate **209**, and may be determined as a function of time since last damper activity and a pre-determined cool-down rate. Block **220** may employ a multi-point look-up table wherein the rate at which a given damper cools is estimated as a function of time from last damper activity (e.g., cool-off time), ambient temperature, and the like. The discrete-time integrator block **215** may estimate the left front damper temperature **125**, which may then be stored in the microprocessor memory portion **27.** As reflected in **FIG. 6,** discrete-time integrator block **215** may be implemented with a discrete-time transfer function T/(z-1), where parameter T may be chosen based on the execution interval, as recognized to those skilled in the art.

Once the damper temperature estimates **125, 126, 127, 128** have been determined, the suspension controller **25** may modulate dampening force characteristics based on those estimates. In one embodiment, the suspension controller **25** may generate output control signals **46** for varying the dampening force of the dampers **40**. For example, as the damper **40** fluid temperature increases, it generally becomes less viscous and provides less dampening force. The suspension controller **25** may compensate for the loss in dampening force by increasing the current provided to the MR assembly of the damper **40**. One or more look-up table(s), equations, and the like may be provided to the suspension controller **25** as known in the art for relating damper fluid temperature to MR current for maintaining a desired dampening force. For example, pending application Serial No. 09/981,082 filed October 16, 2001 to lyengar *et al*. discloses a strategy for temperature compensation in an MR fluid damper that may be adapted for use with the present invention.

While the embodiments of the invention disclosed herein are presently considered to be preferred, various changes and modifications can be made without departing from the spirit and scope of the invention. For example, the suspension control system and method of controlling the MR damper are not limited to any particular design, configuration, sequence, or arrangement.
The damper, sensor, and controller configuration, size, shape, geometry, location, orientation, number, and function may vary without limiting the utility of the invention. Furthermore, the method may be accomplished by numerous alternative strategies, may include additional steps, and vary in step order.

Upon reading the specification and reviewing the drawings hereof, it will become immediately obvious to those skilled in the art that myriad other embodiments of the present invention are possible, and that such embodiments are contemplated and fall within the scope of the presently claimed invention. The scope of the invention is indicated in the appended claims, and all changes that come within the meaning and range of equivalents are intended to be embraced therein.

## Claims

1. A method of controlling at least one magnetorheological damper, the method comprising:
calculating a power input coefficient based on at least one power input characteristic;
calculating a power dissipation coefficient based on at least one power dissipation characteristic;
estimating a damper temperature based on the calculated power input coefficient and the calculated power dissipation coefficient; and
modulating at least one dampening force characteristic based on the estimated damper temperature.

2. The method of claim 1 wherein calculating the power input coefficient comprises resetting the calculated power input coefficient to a predetermined value.

3. The method of claim 1 wherein the power input characteristic is selected from a group consisting of vehicle speed, damper relative velocity, damper coil current, and damper coil resistance.

4. The method of claim 1 wherein the power dissipation characteristic is selected from a group consisting of vehicle speed, damper surface area, damper heat conductivity, damper air flow, and ambient temperature.

5. The method of claim 1 wherein modulating the dampening force characteristic comprises increasing a damper force.

6. The method of claim 1 wherein modulating the dampening force characteristic comprises decreasing a damper force.

7. The method of claim 1 further comprising:
calculating an ambient temperature coefficient based on at least one thermal characteristic; and
calculating the power dissipation coefficient based on the calculated ambient temperature coefficient.

8. The method of claim 7 wherein the thermal characteristic is selected from a group consisting of engine temperature and ambient temperature.

9. The method of claim 1 further comprising:
storing the estimated damper temperature; and
retrieving the stored estimated damper temperature.

10. A computer usable medium including a program for controlling at least one magnetorheological damper, the computer usable medium comprising:
computer readable program code for calculating a power input coefficient based on at least one power input characteristic;
computer readable program code for calculating a power dissipation coefficient based on at least one power dissipation characteristic;
computer readable program code for estimating a damper temperature based on the calculated power input coefficient and the calculated power dissipation coefficient; and
computer readable program code for modulating at least one dampening force characteristic based on the estimated damper temperature.

11. The computer usable medium of claim 10 wherein calculating the power input coefficient comprises resetting the calculated power input coefficient to a predetermined value.

12. The computer usable medium of claim 10 wherein the power input characteristic is selected from a group consisting of vehicle speed, damper relative velocity, damper coil current, and damper coil resistance.

13. The computer usable medium of claim 10 wherein the power dissipation characteristic is selected from a group consisting of vehicle speed, damper surface area, damper heat conductivity, damper air flow, and ambient temperature.

14. The computer usable medium of claim 10 wherein modulating the dampening force characteristic comprises increasing a damper force.

15. The computer usable medium of claim 10 wherein modulating the dampening force characteristic comprises decreasing a damper force.

16. The computer usable medium of claim 10 further comprising:
computer readable program code for calculating an ambient temperature coefficient based on at least one thermal characteristic; and
computer readable program code for calculating the power dissipation coefficient based on the calculated ambient temperature coefficient.

17. The computer usable medium of claim 16 wherein the thermal characteristic is selected from a group consisting of engine temperature and ambient temperature.

18. The computer usable medium of claim 10 further comprising:
computer readable program code for storing the estimated damper temperature; and
computer readable program code for retrieving the stored estimated damper temperature.

19. A suspension control system for controlling at least one magnetorheological damper, the system comprising:
means for calculating a power input coefficient based on at least one power input characteristic;
means for calculating a power dissipation coefficient based on at least one power dissipation characteristic;
means for estimating a damper temperature based on the calculated power input coefficient and the calculated power dissipation coefficient; and
means for modulating a dampening force characteristic based on the calculated damper temperature.

20. The method of claim 19 further comprising:
means for calculating an ambient temperature coefficient based on at least one thermal characteristic; and
means for calculating the power dissipation coefficient based on the calculated ambient temperature coefficient.

21. The method of claim 19 further comprising:
means for storing the estimated damper temperature; and
means for retrieving the stored estimated damper temperature.
